# EUROPEAN PATENT APPLICATION

(11) **EP 4 418 661 A1**
(43) Date of publication of application: **21.08.2024**
(21) Application number: 22891860.3
(22) Date of filing: 02.11.2022
(51) Int. Cl.: H04N 21/426

(54) **VIDEO PROCESSING METHOD AND APPARATUS, ELECTRONIC DEVICE, AND READABLE STORAGE MEDIUM**

(30) Priority: 15.11.2021 CN 202111347351
(71) Applicant: Beijing Zitiao Network Technology Co., Ltd., Beijing 100190 (CN)
(72) Inventor: HE, Siyu, Beijing 100086 (CN); REN, Shibo, Beijing 100086 (CN)
(74) Representative: Dentons UK and Middle East LLP
(86) International application number: PCT/CN2022/129165
(87) International publication number: WO 2023/083064

(57) **Abstract**

The present disclosure relates to a video processing method and apparatus, an electronic device, and a readable storage medium. The method comprises: performing, from a designated video frame position by means of a first thread, a target video editing operation on a video to be processed to acquire target video frames obtained by the performing of the target video editing operation; and in response to a playback instruction, rendering the target video frames by means a second thread, so as to display the target video frames. By performing the target video editing operation in advance on video frames after the designated video frame position, it is ensured that the video frame position on which the target video editing operation is being performed is always ahead of the video frame position of a target video frame that is being displayed, so that the problem of preview stuttering is solved and a preview requirement of a user is ensured; in addition, the target video editing processing and rendering are decoupled and are performed by different threads, so that the problem in a streaming framework that a rendering thread is blocked due to the performing of the target video editing operation is solved, and the preview effect can be improved.

## Description

### CROSS-REFERENCE TO RELATED APPLICATIONS

The present application is based on and claims priority to CN Patent Application No. 202111347351.6 filed on Nov. 15, 2021, the disclosure of which is incorporated by reference herein in its entirety.

### TECHNICAL FIELD

The present disclosure relates to the field of Internet technology, in particular to a video processing method and apparatus, an electronic device and a readable storage medium.

### BACKGROUND

With the continuous development of Internet technology, various applications (APPs) have been developed, wherein applications with a video editing function are especially popular. At present, applications that are capable of providing a video editing function can realize many video editing operations, such as intelligent matting, which requires corresponding processing for each video frame image of a video.

In the related art, a streaming processing framework is usually used for such video editing operation. For example, when intelligent matting is performed, it is possible to perform encoding, matting, rendering and displaying frame by frame.

### SUMMARY

In order to solve or at least partially solve the above-described technical problem, the present disclosure provides a video processing method and apparatus, an electronic device and a readable storage medium.

In a first aspect of the present disclosure, a video processing method is provided, the method comprising:
performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation;
rendering the each target video frame by means of a second thread to display the each target video frame in response to a playback instruction; wherein the video frame position on which the target video editing operation is being performed is ahead of the video frame position corresponding to the target video frame that is being displayed in the video to be processed.

As one possible implementation, the specified video frame position is determined according to the video frame position positioned when the video editing instruction is obtained; wherein the video editing instruction is used for instructing to perform the target video editing operation on the video to be processed; and the video frame position positioned when the video editing instruction is obtained is a preset video frame position or a video frame position specified by a first jump instruction.

As one possible implementation, the specified video frame position is determined according to the video frame position specified by the second jump instruction, and the second jump instruction is an instruction after the video editing instruction for performing the target video editing operation on the video to be processed.

As one possible implementation, if the specified video frame position is determined according to the video frame position positioned when the video editing instruction is obtained, before the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation, the method further comprises:
determining a video editing processing mode corresponding to the first thread according to the specified video frame position; wherein the video editing processing mode is a first processing mode or a second processing mode, the first processing mode is a mode of performing the target video editing operation on key frames, and the second processing mode is a mode of performing the target video editing operation frame by frame.

As one possible implementation, the determining a video editing processing mode corresponding to the first thread according to the specified video frame position comprises:
determining that the video editing processing mode corresponding to the first thread is the first processing mode if the specified video frame position is the preset video frame position; and
determining that the video editing processing mode corresponding to the first thread is the first processing mode or the second processing mode if the specified video frame position is the video frame position specified by the first jump instruction.

As one possible implementation, the determining a video editing processing mode corresponding to the first thread according to the specified video frame position comprises:
determining whether a corresponding target video frame is present on the specified video frame position; and
determining a video editing processing mode corresponding to the first thread according to whether the specified video frame position is the preset video frame position or the video frame position specified by the first jump instruction if a corresponding target video frame is not present on the specified video frame position.

As one possible implementation, the method further comprises: determining that the video editing processing mode corresponding to the first thread is the second processing mode if a corresponding target video frame is present on the specified video frame position; the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation comprises:
determining whether a corresponding target video frame is present frame by frame from the specified video frame position until determining the first video frame position on which a corresponding target video frame is not present; and
performing, from the first video frame position on which a corresponding target video frame is not present, the target video editing operation on the video frame of the video to be processed by means of the first thread according to the second processing mode.

As one possible implementation, if the specified video frame position is determined according to the video frame position specified by the second jump instruction, before the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation, the method further comprises:
determining that the video editing processing mode corresponding to the first thread is the second processing mode if a corresponding target video frame is not present on the specified video frame position.

As one possible implementation, the method further comprises: performing without interrupting the first thread if a corresponding target video frame is present on the specified video frame position, and the first thread is currently performing the target video editing operation on the video to be processed, so that the first thread continues to perform the target video editing operation on the video to be processed.

As one possible implementation, the method further comprises: switching the video editing processing mode to a third processing mode in response to the playback instruction, and performing the target video editing operation by means of the first thread on the video frame of the video to be processed according to the third processing mode; wherein the third processing mode is a mode of determining the video frame position for performing the target video editing operation according to a playback rate.

As one possible implementation, the switching the video editing processing mode to a third processing mode in response to the playback instruction, and performing the target video editing operation by means of the first thread on the video frame of the video to be processed according to the third processing mode comprises: detecting whether a next target video frame to be played is present in real time in response to the playback instruction; and performing the target video editing operation by means of the first thread on the video frame of the video to be processed according to the third processing mode from the position of the next target video frame to be played when it is detected that a next target video frame to be played is not present.

As one possible implementation, the switching the video editing processing mode to a third processing mode in response to the playback instruction, and performing the target video editing operation by means of the first thread on the video frame of the video to be processed according to the third processing mode comprises: performing, from the video frame position on which the target video editing operation is being performed when the playback instruction is obtained, the target video editing operation on the video frame of the video to be processed by means of the first thread according to the third processing mode in response to the playback instruction.

As one possible implementation, the switching the video editing processing mode to a third processing mode in response to the playback instruction, and performing the target video editing operation by means of the first thread on the video frame of the video to be processed according to the third processing mode comprises: determining a switching position corresponding to the third processing mode according to a preset processing duration of performing the target video editing operation for a single video frame, playback rate, and the video frame position on which the target video editing operation is currently being performed in response to the playback instruction; and
performing the target video editing operation on the video frame of the video to be processed from the switching position by means of the first thread, according to the third processing mode.

As one possible implementation, the method further comprises: obtaining a pause instruction; and
pausing the rendering of the target video frame by means of the second thread in response to the pause instruction while the first thread continues to perform the target video editing operation on the video frame of the video to be processed according to the third processing mode.

As one possible implementation, the method further comprises: performing the target video editing operation on the video frame of the video to be processed from the position of an initial video frame of the video to be processed by means of the first thread according to a fourth processing mode after the target video editing operation is performed on a last video frame of the video to be processed; wherein the fourth processing mode is a mode of sequentially performing the target video editing operation on the video frames not present with corresponding target video frames in the video to be processed.

In a second aspect of the present disclosure, a video processing apparatus is provided, which comprises:
a first processing module configured to perform, by means of a first thread and from a specified video frame position, a target video editing operation on a video frame on a specified video frame position in a video to be processed, and perform the target video editing operation in advance on each video frame after the specified video frame position to acquire each target video frame obtained by performing the target video editing operation; and
a second processing module configured to render the each target video frame by means of a second thread to show the each target video frame in response to a playback instruction; wherein the video frame position on which the target video editing operation is being performed is ahead of the video frame position corresponding to the target video frame that is being displayed in the video to be processed.

In a third aspect of the present disclosure, an electronic device is provided, which comprises: a memory and a processor; the memory is configured to store computer program instructions; and the processor is configured to execute the computer program instructions, so that the electronic device implements the video processing method according to any of the first aspect.

In a fourth aspect of the present disclosure, a readable storage medium is provided, which comprises: computer program instructions; the computer program instructions, when executed by at least one processor of an electronic device, cause the electronic device to implement the video processing method according to any of the first aspect.

In a fifth aspect of the present disclosure, a computer program product is provided, which, when executed by a computer, causes the computer to implement the video processing method according to any of the first aspect.

The present disclosure provides a video processing method and apparatus, an electronic device and a readable storage medium, wherein the method comprises: performing, by means of a first thread and from a specified video frame position, a target video editing operation on a video to be processed to acquire each target video frame obtained by performing the target video editing operation; and rendering the each target video frame by means of a second thread so as to display each target video frame in response to the playback instruction.

### BRIEF DESCRIPTION OF THE ACCOMPANYING DRAWINGS

The accompanying drawings here, which are incorporated into the specification and constitute part of this specification, illustrate the embodiments conforming to the present disclosure and serve to explain the principles of the present disclosure together with the specification.

In order to explain the technical solution in the embodiments of the present disclosure or in the related art more explicitly, the accompanying drawings required to be used in the description of the embodiments or the related art will be briefly introduced below; obviously, for those of ordinary skill in the art, other accompanying drawings may also be obtained according to these accompanying drawings on the premise that no inventive effort is involved.
Fig. 1 is a flow chart of a video processing method provided by one embodiment of the present disclosure;
Fig. 2 is a flow chart of a video processing method provided by another embodiment of the present disclosure;
Fig. 3 is a flow chart of a video processing method provided by another embodiment of the present disclosure;
Fig. 4 is a flow chart of a video processing method provided by another embodiment of the present disclosure;
Fig. 5 is a flow chart of a video processing method provided by another embodiment of the present disclosure;
Fig. 6 is a flow chart of a video processing method provided by another embodiment of the present disclosure;
Fig. 7 is a flow chart of a video processing method provided by another embodiment of the present disclosure;
Fig. 8 is a flow chart of a video processing method provided by another embodiment of the present disclosure;
Fig. 9 is a flow chart of a video processing method provided by another embodiment of the present disclosure;
Fig. 10 is a schematic frame diagram of a video processing apparatus provided by one embodiment of the present disclosure;
Fig. 11 is a schematic view of a life cycle of the modules in the embodiment shown in Fig. 10 provided by one embodiment of the present disclosure;
Fig. 12 is a schematic structural view of a video processing apparatus provided by one embodiment of the present disclosure;
Fig. 13 is a schematic structural view of an electronic device provided by one embodiment of the present disclosure.

### DETAILED DESCRIPTION

In order to understand the above-described objects, features and advantages of the present disclosure more explicitly, the solution of the present disclosure will be further described below. It is to be noted that, the embodiments of the present disclosure and the features in the embodiments may be combined with each other in the case where contradiction is absent.

In the following description, many specific details will be elaborated in order to adequately understand the present disclosure, however, the present disclosure may also be implemented in other ways than that described here; apparently, the embodiments in the specification are only some of the embodiments of the present disclosure, rather than all of the embodiments.

During the process of intelligent matting processing by using a streaming processing framework in the related art, if a user performs preview, it is extremely likely to have a serious display stuttering problem, which severely affects the user experience.

The video processing method provided by the present disclosure may be performed by a video processing apparatus, wherein the video processing apparatus may be implemented by any software and/or hardware. As an example, the video processing apparatus may be internet of things (IOT) devices such as a tablet computer, a cell phone (for example, a folding screen cell phone, a large screen cell phone, etc.), a wearable device, a vehicle-mounted device, an augmented reality (AR) /virtual reality (VR) device, a notebook computer, an ultra-mobile personal computer, UMPC), a netbook, a personal digital assistant (PDA), a smart TV, a smart screen, a high-definition TV, a 4K TV, a smart speaker and a smart projector, etc., and the present disclosure is not limited to a specific type of electronic device.

It is to be noted that, the video processing method provided by the present disclosure may at least be applied to scenarios with the following characteristics:
1. For each video frame of a video to be processed, it is necessary to perform video editing operation, and generate and save a corresponding target video frame (that is, a video editing processing result) for rendering and display.
2. The video editing operation is very time-consuming, but it is necessary to provide a better preview effect.
3. The video editing operation needs to follow up and align an operation instruction input by the user in real time, for example, a jump instruction (also referred to as a seek instruction), an update instruction (also referred to as a refresh instruction), a playback instruction, a variable rate playback instruction and a pause instruction, etc., input by a user.

For scenarios with the above-described characteristics, it is possible to ensure the preview effect of a user by using the video editing processing method provided by the present disclosure.

In order to more clearly introduce the video processing method provided by the present disclosure, in the following embodiments, the video processing method provided by the present disclosure will be described in detail by taking an electronic device in which a video editing application (hereinafter referred to as application for short) is installed as an example.

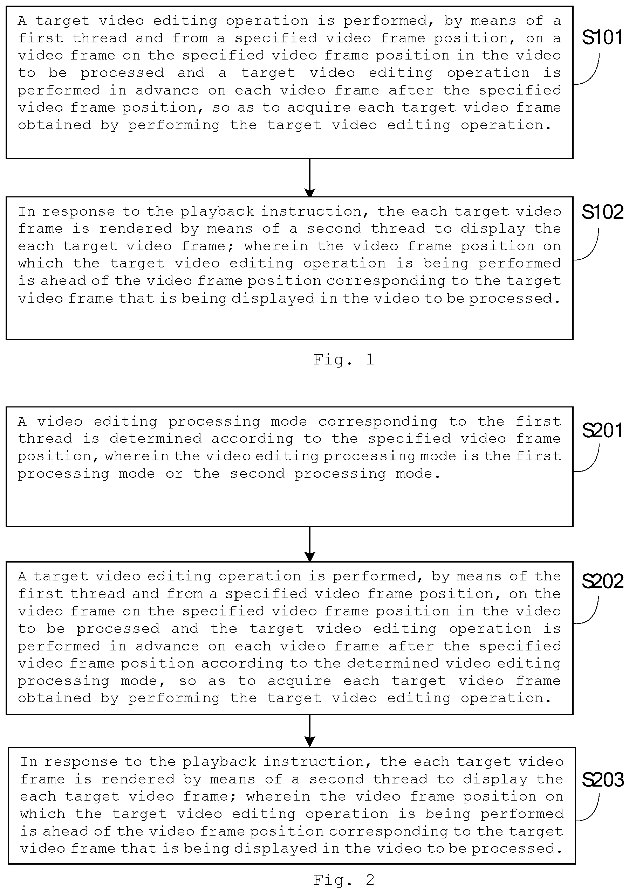

Fig. 1 is a flow chart of a video processing method provided by one embodiment of the present disclosure. Referring to Fig. 1, the method provided by this embodiment comprises:
In S101, a target video editing operation is performed, by means of a first thread and from a specified video frame position, on a video frame on the specified video frame position in the video to be processed and a target video editing operation is performed in advance on each video frame after the specified video frame position, so as to acquire each target video frame obtained by performing the target video editing operation.

The video to be processed is a material required to perform a target video editing operation. The present disclosure is not limited to a duration, storage format, resolution, video content and acquiring method, etc. of the video to be processed.

The first thread is a thread for performing a target video editing operation on the video to be processed, which may also be referred to as an algorithm thread. The algorithm thread may call an algorithm example corresponding to the target video editing operation to implement performing the target video editing operation on the video to be processed. In addition, the present disclosure is not limited to a method of determining the first thread.

Wherein, the present disclosure is not limited to a type of the target video editing operation; as an example, the target video editing operation may comprise, but is not limited to, intelligent matting, adding stickers and filters, and the like.

The specified video frame position may be a position of any video frame in the video to be processed. As an example, the specified video frame position may be a video frame position positioned when the video editing instruction is obtained, or a video frame position specified by the user through a trigger operation.

The video editing instruction is used to instruct to perform the target video editing operation on each video frame of the video to be processed. The present disclosure is not limited to an implementation of obtaining a video editing instruction; for example, a user may input a video editing instruction to an application by operating a corresponding control provided by this application.

An implementation of this step will be exemplarily introduced below by taking different scenarios as examples:
In one possible implementation, the user may select a video to be processed through a material selection page displayed by this application, and import the same into this application to perform video editing. The application may display a video editing page on the user interface, wherein the video editing page may comprise controls corresponding to a plurality of different video editing operations, which comprise a target control corresponding to a target video editing operation (for example, intelligent matting) ; when the application receives a trigger operation (for example, a clicking operation) on the target control by the user, a video editing instruction is generated for instructing to perform intelligent matting on each video frame of the video to be processed, and in response to the video editing instruction, the application performs a target video editing operation on the video to be processed from the specified video frame position.

In this scenario, when the video to be processed is imported, the application may locate to a preset video frame position by default; since the subsequent user does not input any trigger operation, the located video frame position will not change, and the located video frame position is still the preset video frame position when the video editing instruction is obtained, that is, the specified video frame position is the preset video frame position. Wherein the preset video frame position may be any video frame of the video to be processed, for example, the preset video frame position is a position of an initial video frame of the video to be processed.

In another possible implementation, the user may select a video to be processed through a material selection page displayed by this application, and import the same into this application to perform video editing. The application may display a video editing page on the user interface, wherein the video editing page may comprise controls corresponding to a plurality of different video editing operations, which comprises a target control corresponding to a target video editing operation (for example, intelligent matting) ; when the application receives a trigger operation (for example, a clicking operation) on the target control by the user, a video editing instruction is generated for instructing to perform intelligent matting on each video frame of the video to be processed, and in response to the video editing instruction, the application performs a target video editing operation on the video to be processed from the specified video frame position. Wherein, before inputting the trigger operation on the target control, the user may also input a first jump instruction, for jumping a located position from a preset video frame position to a video frame position indicated by the first jump instruction.

In this scenario, the specified video frame position is a video frame position indicated by the first jump instruction. It is to be noted that, the user may input one or more first jump instructions, normally with a video frame position indicated by the last jump instruction as the specified video frame position.

In another possible implementation, based on a first possible implementation described above, the first thread has started to perform the target video editing operation from a preset video frame position; during the process of performing the target video editing operation, the user may input a second jump instruction, and the application is in response to the second jump instruction, so that the first thread is required to perform the target video editing operation from a video frame position indicated by the second jump instruction.

In this scenario, the specified video frame position is a video frame position indicated by the second jump instruction. Wherein, the user may input a plurality of second jump instructions, and the first thread is required to be in response to each second jump instruction respectively, and perform the target video editing operation from a video frame position indicated by the second jump instruction.

In S102, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

During the process that the first thread performs a target video editing operation on the video to be processed, the application supports the user to preview each target video frame obtained by performing the target video editing operation, that is, the application supports the user to preview each target video frame.

In one possible implementation, when the application receives a playback instruction, in response to the playback instruction, the second thread renders each target video frame according to a playback rate to play each target video frame.

It is to be noted that, during the process that the first thread performs a target video editing operation on the video to be processed, when a target video frame corresponding to the specified video frame position is obtained by performing the target video editing operation on a video frame on the specified video frame position, the second thread may automatically render the target video frame corresponding to the specified video frame position to display the target video frame corresponding to the specified video frame position. This ensures a processing effect corresponding to a specified video frame position of a user preview before the application receives a playback instruction.

In another possible implementation, during the process that the first thread performs a target video editing operation on the video to be processed, when a target video frame corresponding to the specified video frame position is obtained by performing the target video editing operation on a video frame on the specified video frame position, the second thread may automatically render each target video frame from the specified video frame position, that is, the user does not need to trigger a playback instruction.

No matter which method described above is used, in the method provided by this embodiment, it is ensured that the video frame position on which the target video editing operation is currently being performed is always ahead of the position of the target video frame that is currently being displayed in the video to be processed, and ensured that there is a target video frame for which the target video editing operation has been performed available for preview, so that the problem of user preview stuttering may be solved.

In order to make the present solution more clear, the meaning that the video frame position on which the target video editing operation is currently being performed is ahead of the position of the target video frame that is currently being displayed in the video to be processed will be explained by way of an example here: suppose that the video to be processed has 100 frames, which are the 1st frame to the 100th frame according to a temporal sequence, the target video frame corresponding to the 20th frame is currently being displayed, and the video frame position on which the target video editing operation is currently being performed is the 30th frame, this indicates that the video frame position on which the target video editing operation is currently being performed is ahead of the position of the target video frame that is currently being displayed in the video to be processed.

In the method provided by this embodiment, the target video editing operation is performed, from the specified video frame position by means of a first thread, on the video to be processed to acquire each target video frame obtained by performing the target video editing operation; and the each target video frame is rendered by means of a second thread so as to display each target video frame in response to the playback instruction. In the present disclosure, the target video editing operation is performed in advance on each video frame after the specified video frame position, it is ensured that the video frame position on which the target video editing operation is being performed is always ahead of the video frame position of a target video frame that is being displayed in the video frame to be processed, so that the problem of preview stuttering during the process of performing a target video editing operation on the video to be processed is solved, and a preview requirement of a user is ensured; in addition, since it is relatively time-consuming to perform the target video editing operation, if the time consumption of algorithm processing does not match that of the rendering thread, it is likely to block the rendering thread, and therefore, in the present discourse, the steps of performing a video editing processing and rendering are decoupled and performed by different threads, so that the problem in a streaming framework that a rendering thread is blocked due to performing a target video editing operation is solved, which is favorable for improving the preview effect.

On the basis of the embodiment shown in Fig. 1, the video processing method provided by the present disclosure may provide at least the following several video editing processing modes; when the application receives a video editing instruction, a video editing processing mode corresponding to the first thread may be determined according to a preset strategy. Wherein, the preset strategy may be related to, but is not limited to one or more factors such as a current video frame position of the video to be processed, an overall progress of the video to be processed in performing the target video editing operation, a playback state (a pause state or a play state), as well as a trigger operation by the user.

Wherein, the application supports at least the following four video editing and processing modes, which are a first processing mode, a second processing mode, a third processing mode and a fourth processing mode respectively.

Wherein, the first processing mode is a mode of performing the target video editing operation on key frames of the video to be processed, and the first processing mode may also be referred to as a preprocess mode, an anchor mode or an ancher mode and the like.

The second processing mode is a mode of performing the target video editing operation frame by frame, and the second processing mode may also be referred to as a jump processing mode, a seek mode and the like.

The third processing mode is a mode of determining a video frame position on which a target video editing operation is performed based on a playback progress, and the third processing mode may also be referred to as a playback processing mode, a playback mode and the like.

The fourth processing mode is a mode of sequentially performing a target video editing operation on the video frames where corresponding target video frames are not present in the video to be processed. That is, the fourth processing mode is a mode of sequentially performing the target video editing operation on the video frames for which the target video editing operation has not been performed according to a direction from an initial video frame to a last video frame of the video to be processed. The fourth processing mode may also be referred to as a self-propagation processing mode, an adaptive mode and the like.

The application may determine a video editing processing mode corresponding to the first thread performing a target video editing operation in different scenarios based on the preset strategy.

In the following, by way of several specific embodiments, a video editing processing mode in which the first thread performs a target video editing operation on the video to be processed in different scenarios will be introduced in detail.

Fig. 2 is a flow chart of a video processing method provided by one embodiment of the present disclosure. Referring to Fig. 2, the method provided by this embodiment comprises:
In S201, a video editing processing mode corresponding to the first thread is determined according to the specified video frame position, wherein the video editing processing mode is the first processing mode or the second processing mode.

In conjunction with that described in the embodiment shown in Fig. 1, the specified video frame position may be a preset video frame position, or a video frame position indicated by the first jump instruction, or a video frame position indicated by the second jump instruction. In different conditions, the video editing processing mode corresponding to the first thread may vary.

Wherein, the first processing mode is a mode of performing the target video editing operation on key frames (that is, I frame) . I frame, which is also referred to as an intra picture, is an important frame in inter-frame compression coding. During the encoding process, some video frame sequences are compressed into I frames; some into P frames; and also some into B frames. Upon decoding, a complete image may be reconstructed only according to the data of I frames, without referring to the data of other video frames.

The second processing mode is a mode of performing the target video editing operation on the video to be processed frame by frame. Wherein, the second processing mode is a video editing processing mode in response to a seek instruction input by the user provided by the present disclosure.

In one possible implementation, if the specified video frame position is a preset video frame position (for example, a position of the initial video frame of the video to be processed), a video editing processing mode corresponding to the first thread is determined as the first processing mode.

By performing a target video editing operation on key frames of the video to be processed, if the user previews an effect processing result, a complete image may be reconstructed according to the target video frames corresponding to the key frames, so that the preview effect of the user may be favorably ensured.

In another possible implementation, if the specified video frame position is a video frame position indicated by the jump instruction, the video editing processing mode corresponding to the first thread is the first processing mode or the second processing mode. As an example, if the specified video frame position is a video frame position indicated by the first jump instruction, the video editing processing mode corresponding to the first thread may be the first processing mode or the second processing mode; if the specified video frame position is a video frame position indicated by the first jump instruction, the video editing processing mode corresponding to the first thread may be the second processing mode.

In S202, a target video editing operation is performed, by means of the first thread and from a specified video frame position, on the video frame on the specified video frame position in the video to be processed and the target video editing operation is performed in advance on each video frame after the specified video frame position according to the determined video editing processing mode, so as to acquire each target video frame obtained by performing the target video editing operation.

If the determined video editing processing mode is the first processing mode, the application sequentially performs a target video editing operation on each key frame in the video to be processed from the specified video frame position, and stores a target video frame obtained by performing the target video editing operation on each key frame.

If the determined video editing processing mode is the second processing mode, the application performs a target video editing operation on the video to be processed frame by frame from the specified video frame position, and stores a target video frame obtained by performing the target video editing operation on each video frame.

In S203, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

The step S203 in this embodiment is similar to the step S102 in the embodiment shown in Fig. 1 so that reference may be made to a detailed description of the embodiment shown in Fig. 1, which will not be described in detail for the sake of conciseness.

In the method provided by this embodiment, in the video editing scenario, a video editing processing mode corresponding to the first thread is determined by obtaining and analyzing the specified video frame position, and the target video editing operation is performed on the corresponding video frame in the video to be processed according to the determined video editing processing mode, so as to ensure that the video frame position on which the target video editing operation is being performed is always ahead of the video frame position of a target video frame that is being displayed in the video frame to be processed, so that the problem of preview stuttering occurring during the process of performing target video editing operation on the video to be processed is solved and a preview requirement of a user is ensured; in addition, since it is relatively time-consuming to perform the target video editing operation, if the time consumption of algorithm processing does not match that of the rendering thread, it is very likely to block the rendering thread, and therefore, in the present disclosure, the steps of performing a video editing processing and rendering are decoupled and performed by different threads, so that the problem in a streaming framework that a rendering thread is blocked due to performing a target video editing operation is solved, which is favorable for improving the preview effect.

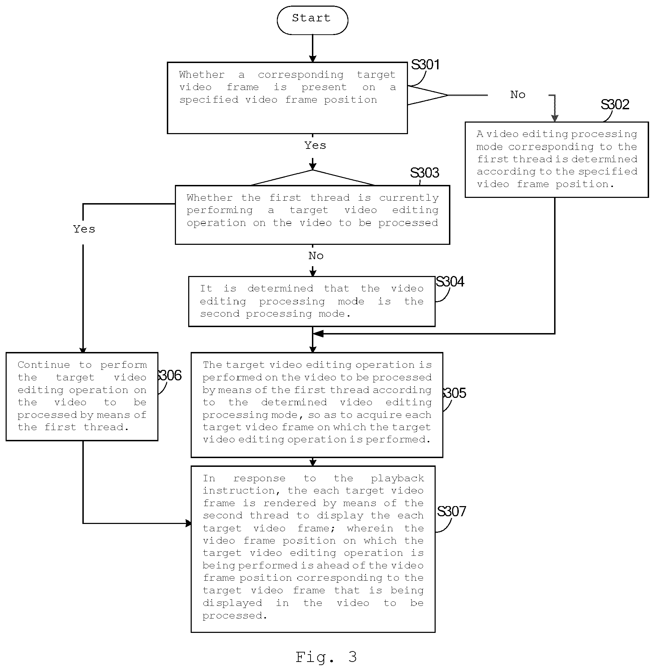

Fig. 3 is a flow chart of a video processing method provided by another embodiment of the present disclosure. Referring to Fig. 3, the method of this embodiment comprises:
On the basis of the embodiment shown in Fig. 2, S201 in the embodiment shown in Fig. 2 may be realized by S301 to S306 in this embodiment.

In S301, it is determined whether a corresponding target video frame is present on a specified video frame position.

If a corresponding target video frame is not present on the specified video frame position, S302 is performed; and if a corresponding target video frame is present on the specified video frame position, S303 is performed.

In S302, a video editing processing mode corresponding to the first thread is determined according to the specified video frame position.

Wherein, after a video editing processing mode corresponding to the first thread is determined, S305 is performed.

In S303, it is determined whether the current first thread performs a target video editing operation on the video to be processed.

If the current first thread does not perform the target video editing operation on the video to be processed, S304 and S305 are performed. If the first thread is currently performing the target video editing operation on the video to be processed, S306 is performed.

In S304, it is determined that the video editing processing mode is the second processing mode.

In S305, the target video editing operation is performed on the video to be processed by means of the first thread according to the determined video editing processing mode, so as to acquire each target video frame on which the target video editing operation is performed.

In S306, continue to perform the target video editing operation on the video to be processed by means of the first thread.

In an actual scenario, the decoder is required to be updated when the first thread starts to perform the target video editing operation according to a video editing processing mode, or when the video editing processing mode is switched, and it is necessary to consume a number of computing resources in order to update the decoder. Therefore, in the method provided by this embodiment, it is determined whether to switch the video editing processing mode by analyzing whether a corresponding target video frame is present on the specified video frame position and whether there is currently a process of performing a target video editing operation on the video to be processed (that is, whether the first thread is currently performing the target video editing operation on the video to be processed), so as to reduce the computing resource waste due to frequently updating the decoder, and further improve the processing efficiency of performing the target video editing operation.

Wherein, it is analyzed whether a corresponding target video frame is present on the specified video frame position, and this is because in some cases, the target video editing operation might have been performed on the video to be processed previously, so that some or all the video frames in the video to be processed are present with corresponding target video frames. With the target video editing operation being intelligent matting as an example, suppose that after the user imports the video to be processed, a video editing instruction is generated by operating a control corresponding to intelligent matting; the application performs intelligent matting on the video to be processed according to the video editing instruction; when intelligent matting is not completely accomplished, the user inputs an undoing instruction to cancel intelligent matting on the video to be processed. Since all the videos to be processed have not accomplished intelligent matting when intelligent matting is undone, some video frames are present with corresponding target video frames (that is, matting results).

In a possible case, if a corresponding target video frame is not present on the specified video frame position, it is necessary to determine a video editing processing mode corresponding to the first thread according to the specified video frame position no matter whether the first thread is currently performing the target video editing operation on the video to be processed, and the first thread performs a target video editing operation on the video to be processed from the specified video frame position according to the determined video editing processing mode.

Wherein, for an implementation of determining a video editing processing mode corresponding to the first thread according to the specified video frame position, reference may be made to the above, which will not be described in detail here.

In another possible case, if a corresponding target video frame is present on the specified video frame position, and a process of performing a target effect for the video to be processed is currently not present, since video coding is performed according to a temporal sequence of the video frames, it is possible to determine whether a corresponding target video frame is present from a next frame to the specified video frame position, until the first video frame position on which a corresponding target video frame is not present is determined, and the target video editing operation is performed, from the first video frame position on which a corresponding target video frame is not present, on the video to be processed by means of the first thread according to the first processing mode or the second processing mode.

In this scenario, the first thread uses the first processing mode or the second processing mode, which may be determined according to whether the specified video frame position is the preset video frame position or the video frame position indicated by the first jump instruction.

In another possible case, if a corresponding target video frame is present on the specified video frame position, and supposing that a process of performing a target effect for the video to be processed is currently present, it is possible to continue this process, so that there is no need to update the decoder, thereby reducing the resource consumption due to updating the decoder when the effect processing mode is switched. For example, when the specified video frame position described above is a video frame position indicated by the second jump instruction, it is possible that the first thread is performing a target video editing operation on the video to be processed according to a video editing processing mode, and a corresponding target video frame is present on the video frame position indicated by the second jump instruction, so that there is no need to switch the video editing processing mode, that is, the first thread is not interrupted.

Wherein, if the specified video frame position is a preset video frame position or a video frame position indicated by the first jump instruction, the determining a video editing processing mode may be realized by referring to a method described previously; if the specified video frame position is a video frame position indicated by the second jump instruction, it may be determined that the video editing processing mode is the second processing mode.

In S307, in response to the playback instruction, the each target video frame is rendered by means of the second thread to display the each target video frame; wherein the video frame position on which the target video editing operation is being performed is ahead of the video frame position corresponding to the target video frame that is being displayed in the video to be processed.

No matter on the basis of S305 or S306, during a process of performing a target video editing operation on the video to be processed by means of the first thread, the application may play by means of the second thread in response to the playback instruction. Specifically, the step S307 in this embodiment is similar to the step S203 in the embodiment shown in Fig. 2, so that reference may be made to a detailed description of the embodiment shown in Fig. 2, which will not be described in detail here for the sake of conciseness.

In the method provided by this embodiment, in the video editing scenario, it is determined whether to switch the video editing processing mode by analyzing whether a corresponding target video frame is present on the specified video frame position and whether there is currently a process of performing a target video editing operation on the video to be processed, so that not only a preview requirement of a user is realized, but also the problem of preview stuttering of a user is solved, and the resource waste due to frequently updating the decoder is reduced, thereby improving the processing efficiency of performing the target video editing.

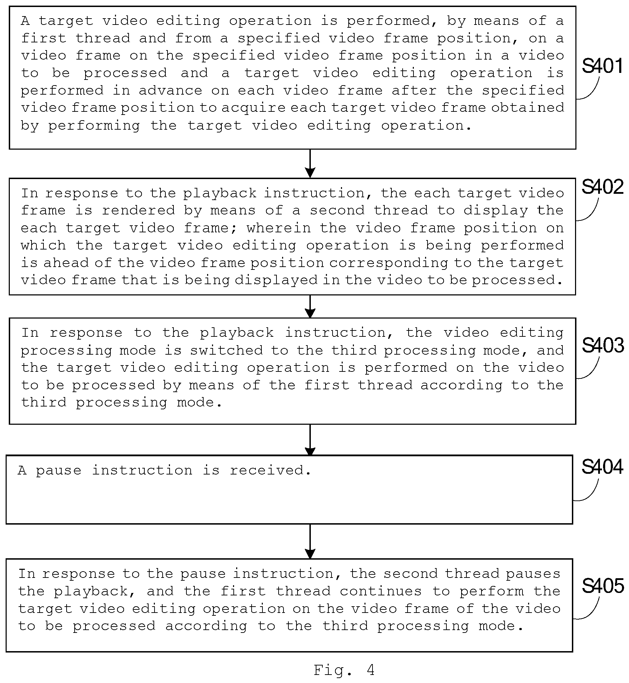

Fig. 4 is a flow chart of a video processing method provided by another embodiment of the present disclosure. Referring to Fig. 4, the method provided by this embodiment comprises:
In S401, a target video editing operation is performed, by means of a first thread and from a specified video frame position, on a video frame on the specified video frame position in a video to be processed and a target video editing operation is performed in advance on each video frame after the specified video frame position to acquire each target video frame obtained by performing the target video editing operation.

In S402, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

The steps S401 and S402 of this embodiment are similar to S101 and S102 in the embodiment shown in Fig. 1 respectively, so that reference may be made to a detailed description of the embodiment shown in Fig. 1, which will not be described in detail here for the sake of conciseness.

In S403, in response to the playback instruction, the video editing processing mode is switched to the third processing mode, and the target video editing operation is performed on the video to be processed by means of the first thread according to the third processing mode.

The third processing mode is a mode of determining a video frame position for performing a target effect according to a preview rate.

As an example, supposing that the video to be processed has 100 frames, in steps S401 to S402, a target video editing operation has been performed on the 1st to 10th video frames based on the determined video editing processing mode, and corresponding target video frames have been obtained. When the application receives a playback instruction, the second thread starts to render the target video frames corresponding to the 1st to 10th video frames sequentially, so as to play the target video frames corresponding to the 1st to 10th video frames respectively according to a set playback rate, and supposing that it is currently played to the 10th frame, it is detected that a corresponding target video frame is not present in the next video frame to be played (that is, the 11th frame) . If it is more time-consuming to perform the target video editing operation than the playback rate, when the target video editing operation is performed on the 11th video frame according to a temporal sequence of the video frames, it is impossible to meet the playback requirements, which will inevitably lead to the problems such as serious playback stuttering and even screen blurring. Therefore, the video editing processing mode is switched to the third processing mode, so that the first thread may determine the video frame position on which the target video editing operation is performed according to the playback rate, so as to ensure that the video frame position on which the target video editing operation is being performed is always ahead of the corresponding video frame position of a target video frame that is being displayed in the video frame to be processed; a target video editing operation is performed on the video frame which is ahead of a preview progress, thereby meeting a preview requirement, and solving the problems such as serious preview stuttering and screen blurring.

It is to be noted that, when the video editing processing mode is the third processing mode, the video frames ahead of a playback progress on which the target video editing operation is performed may be dynamically determined by combining one or more factors such as a preview rate, a preset processing duration for a single video frame to perform the target video editing operation (that is, the average time consumption of the target video editing operation), a video frame position on which the target video editing operation is currently being performed, or a video frame for which the target video editing operation has been performed.

Continuing in conjunction with the example in a previous paragraph, for example, when it is determined that the target video editing operation is performed on the 15th video frame by means of a first thread according to the third processing mode, while a target effect has been performed on the 15th video frame, the target video editing operation may be performed on the 16th video frame according to a temporal sequence of the video frames (of course, it is not limited to the 16th video frame, but may also be another subsequent video frame with a certain interval from the 15th video frame, for example, the 18th video frame); when it is determined that a corresponding target video frame is not present in the 16th video frame, the target video editing operation is performed on the 16th video frame, and after the target video editing operation is performed on the 16th video frame, the video frame position on which the target video editing operation is to be performed is continuously determined flexibly according to the third processing mode.

As may be known from the above-described introduction and examples of the third processing mode, the third processing mode is a video editing processing mode in response to the playback instruction, and during the process of playing the target video frame, it is possible to ensure that the video frame position on which the target video editing operation is being performed is always ahead of the video frame position corresponding to the target video frame that is being played in the video to be processed, that is, ahead of the playback progress.

In this embodiment, the video editing processing mode is switched to the third processing mode, so that a switching timing may be determined by one or more of the following factors.

1. Random operation of a user. For example, a user might continuously input a playback instruction and a pause instruction. 2. Whether there is a process of performing a target video editing operation for the video to be processed. 3. A target video frame obtained after the target video editing operation has been performed.

The influence of the above-described factors will be exemplarily explained:
Supposing that the video to be processed has 100 frames, in the steps S401 to S402, the target video editing operation has been performed on the 1st to 10th video frames based on the determined video editing processing mode, and the target video frames corresponding to the 1st to 10th video frames respectively are obtained.

In an instance (1): suppose that the application receives a playback instruction, the decoder is updated, and the video editing processing mode is immediately switched to the third processing mode; and the target video frame is played from the position of the 1st frame. Next, the application receives a pause instruction; since there is a short interval between the two instructions of a playback instruction and a pause instruction, the second thread might not render to the 10th frame. However, the process of the current video editing processing mode is interrupted, that is, the first thread is interrupted, the decoder is updated again, and the video editing processing mode is switched, which is possible to lead to a greater consumption of computing resources and result in a reduced video processing efficiency.

In an instance (2) : during the playing process, it is detected whether a corresponding target video frame is present on the position of the next video frame to be played in real time; if the video editing processing mode is switched after it is determined that a corresponding target video frame is not present on the position of the next video frame to be played, during the process of playing the 1st to 10th frames, it is also possible to perform the target video editing operation on the video to be processed according to the previous video editing processing mode, that is, the process of currently performing the target video editing operation is not interrupted, which may improve the utilization rate of the computing resources.

Further, on the basis of the instance (2), consider a case that the playback progress does not reach the progress of the target video editing operation when the application receives a pause instruction. For example, when it is played to the 8th frame, the application receives a pause instruction; during the process of playing the 1st to 8th frames, the application also performs target video editing operations on the 11th and 12th frames by the previous video editing processing mode.

In the above-described instance (2), although the application has received a playback instruction and a pause instruction, since a corresponding target video frame is present in such part to be played, it is also possible to ensure a smooth play without switching the video editing processing mode corresponding to the first thread, which may also reduce switching the video editing processing mode while lead to a greater consumption of computing resources; on the other hand, during the playing process, the first thread also performs the target video editing operation on some video frames according to the previous video editing processing mode, thereby improving the video processing efficiency.

Based on the above-described description, it may be known that in this step, the application may determine the switching timing of the video editing processing mode based on one or more of the above-described factors in response to the playback instruction.

In the method provided by this embodiment, during a process of performing a target video editing operation on the video to be processed by means of the first thread, a playback instruction is received; in response to the playback instruction, the video editing processing mode may be switched to the third processing mode to perform the target video editing operation on the video frame of the video to be processed; by the third processing mode, it is possible to ensure that the video frame position on which the target video editing operation is being performed is always ahead of the playback progress during the playing process, so that the problems such as serious user preview stuttering and screen blurring are solved and the video processing efficiency is improved, which is favorable for enhancing the user experience.

Alternatively, on the basis of the embodiment shown in Fig. 4, it further comprises:
In S404, a pause instruction is received.

In S405, in response to the pause instruction, the second thread pauses the playback, and the first thread continues to perform the target video editing operation on the video frame of the video to be processed according to the third processing mode.

Specifically, when the application receives a pause instruction, the second thread stops rendering the target video frame, that is, pausing the playback of the target video frame.

Since there is a process of performing a target effect for the video to be processed when the pause instruction is received, it is possible not to interrupt this process, that is, the first thread continues to perform a target video editing operation on the video to be processed, i.e., continuing to perform a target video editing operation on the video frame of the video to be processed according to the third processing mode. In this way, it is possible to effectively utilize the computing resources of the electronic device to perform video editing, and improve the utilization rate of computing resources, thereby improving the video processing efficiency.

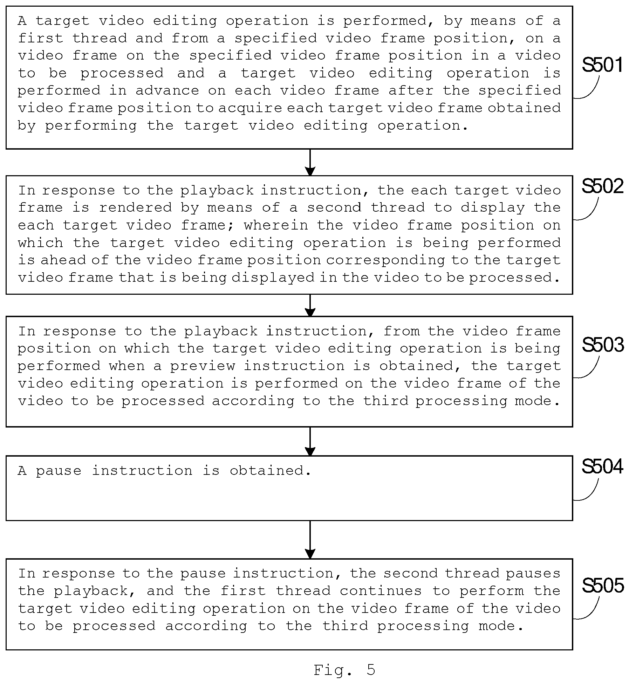

In the following, several possible implementations corresponding to the step S403 will be introduced by way of the embodiments shown in Figs. 5 to 7.

Fig. 5 is a flow chart of a video processing method provided by another embodiment of the present disclosure. Referring to Fig. 5, the method of this embodiment comprises:
In S501, a target video editing operation is performed, by means of a first thread and from a specified video frame position, on a video frame on the specified video frame position in a video to be processed and a target video editing operation is performed in advance on each video frame after the specified video frame position to acquire each target video frame obtained by performing the target video editing operation.

In S502, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

The steps S501 and S502 of this embodiment are similar to S401 and S402 in the embodiment shown in Fig. 4 respectively, so that reference may be made to a detailed description of the embodiment shown in Fig. 4, which will not be described in detail here for the sake of conciseness.

In S503, in response to the playback instruction, from the video frame position on which the target video editing operation is being performed when a preview instruction is obtained, the target video editing operation is performed on the video frame of the video to be processed according to the third processing mode.

In this step, when the playback instruction is obtained, the first thread might be performing a target video editing operation on a certain video frame; in this case, the video frame position on which the video editing processing mode is switched is the video frame position on which the target video editing operation is currently being performed; the application might also have just accomplished the target video editing operation on a certain video frame, but has not started the target video editing operation on the next video frame, and in this case, the video frame position on which the video editing processing mode is switched is the position of the next video frame on which the target video editing operation is to be performed.

Wherein, the application may immediately switch the video editing processing mode corresponding to the first thread to the third processing mode after obtaining the playback instruction, and perform the target video editing operation on the video frame of the video to be processed according to the third processing mode from the video frame position on which it is determined to switch the video editing processing mode.

It is to be noted that, a sequence of performing S502 and S503 is not limited.

In the method provided by this embodiment, during the process of performing the target video editing operation on the video to be processed, a playback instruction is obtained; in response to the playback instruction, the target video editing operation is performed on the video frame of the video to be processed by means of the first thread according to the third processing mode from the video frame position on which the target video editing operation is being performed when the playback instruction is obtained. The implementation provided by this embodiment is simple in logic and free of complicated judgment. In addition, by the third processing mode, it is possible to ensure that, during the playing process, the video frame position on which the target video editing operation is being performed is always ahead of the playback progress, so that the problems such as serious user preview stuttering and screen blurring are solved and the video processing efficiency is improved, which is favorable for enhancing the user experience.

Alternatively, on the basis of the embodiment shown in Fig. 5, it further comprises:
In S504, a pause instruction is obtained.

In S505, in response to the pause instruction, the second thread pauses the playback, and the first thread continues to perform the target video editing operation on the video frame of the video to be processed according to the third processing mode.

Specifically, when the application receives a pause instruction, the second thread stops rendering the target video frame, that is, pausing the playback of the target video frame.

Since there is a process of performing a target effect for the video to be processed when the pause instruction is received, it is possible not to interrupt this process, that is, the first thread continues to perform a target video editing operation on the video to be processed, i.e., continuing to perform a target video editing operation on the video frame of the video to be processed according to the third processing mode. In this way, it is possible to effectively utilize the computing resources of the electronic device to perform video editing, and improve the utilization rate of computing resources, thereby improving the video processing efficiency.

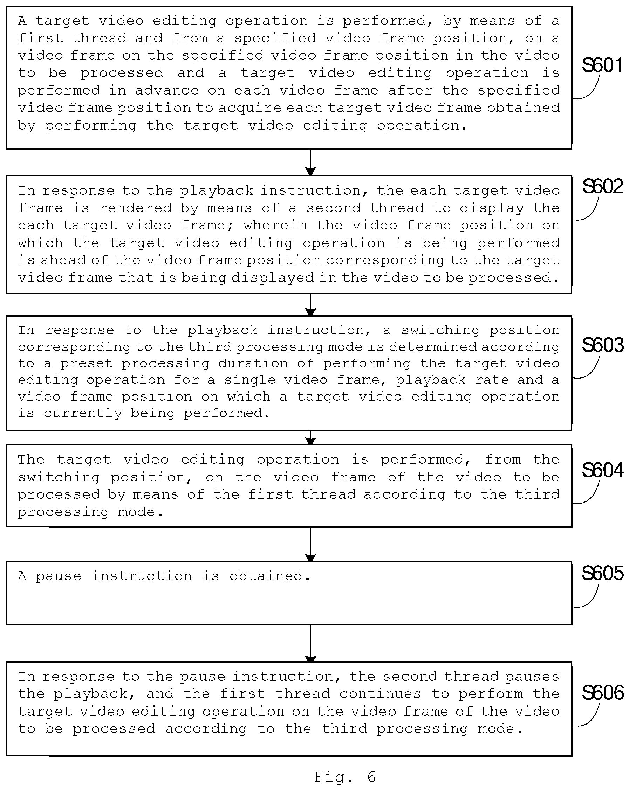

Fig. 6 is a flow chart of a video processing method provided by another embodiment of the present disclosure. Referring to Fig. 6, the method provided by this embodiment comprises:

In S601, a target video editing operation is performed, by means of a first thread and from a specified video frame position, on a video frame on the specified video frame position in the video to be processed and a target video editing operation is performed in advance on each video frame after the specified video frame position to acquire each target video frame obtained by performing the target video editing operation.

In S602, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

The steps S601 and S602 of this embodiment are similar to S401 and S402 in the embodiment shown in Fig. 4 respectively, so that reference may be made to a detailed description of the embodiment shown in Fig. 4, which will not be described in detail here for the sake of conciseness.

In S603, in response to the playback instruction, a switching position corresponding to the third processing mode is determined according to a preset processing duration of performing the target video editing operation for a single video frame, playback rate and a video frame position on which a target video editing operation is currently being performed.

As an example, a maximum duration for which the current video editing processing mode may continue to be performed may be determined according to the playback rate and the position of the video frame on which the target video editing operation is being performed; Next, according to the determined maximum duration and the preset processing duration of performing the target video editing operation for a single video frame, the number S of video frames that may be processed by using the current video editing processing mode within the maximum duration is determined; next, a switching position of the video editing processing mode is determined from the S consecutive video frames from the video frame position on which the target video editing operation is currently being performed. Wherein, the switching position of the video editing processing mode may be any video frame among the S consecutive video frames from the video frame position on which the target video editing operation is currently being performed.

In some possible implementations, in order to reduce mistakes in switching the video editing processing mode, for example, the processing progress of the target video editing operation cannot meet the rendering progress when the switching timing is too late, the video frame among the S consecutive video frames that is close to the video frame on which the target video editing operation is currently being performed may be set as the switching position.

It should be understood that when the above-described maximum duration is determined, since the target video editing operation has not been accomplished for the video frame on which the target video editing operation is currently being performed, the maximum duration may be calculated according to a previous frame of the video frame on which the target video editing operation is currently being performed, thereby improving the accuracy of a calculation result.

It is to be noted that, a sequence of performing S602 and S603 is not limited.

In S604, the target video editing operation is performed on the video frame of the video to be processed from the switching position by means of the first thread according to the third processing mode.

Wherein, for the details of the third processing mode, reference may be made to the description in the embodiment shown in Fig. 4, which will not be described in detail here for the sake of conciseness.

In the method provided by this embodiment, during the process of performing the target video editing operation on the video to be processed, a playback instruction is obtained; in response to the playback instruction, a switching position of the video editing processing mode is flexibly determined according to a duration required for performing the target video editing operation for a single video frame, playback rate and a video frame position on which the target video editing operation is currently being performed; when the target video editing operation progress reaches the switching position, the video editing processing mode is switched to the third processing mode, which improves the flexibility of switching the video editing processing mode. In addition, by the third processing mode, it is possible to ensure that, during the playing process, the video frame position on which the target video editing operation is being performed is always ahead of the playback progress, so that the problems such as serious user preview stuttering and screen blurring are solved and the video processing efficiency is improved, which is favorable for enhancing the user experience.

Alternatively, on the basis of the embodiment shown in Fig. 6, it further comprises:
In S605, a pause instruction is obtained.

In S606, in response to the pause instruction, the second thread pauses the playback, and the first thread continues to perform the target video editing operation on the video frame of the video to be processed according to the third processing mode.

Specifically, when the application receives a pause instruction, the second thread stops rendering the target video frame, that is, pausing the playback of the target video frame.

Since there is a process of performing a target effect for the video to be processed when the pause instruction is received, it is possible not to interrupt this process, that is, the first thread continues to perform a target video editing operation on the video to be processed, i.e., continues to perform a target video editing operation on the video frame of the video to be processed according to the third processing mode. In this way, it is possible to effectively utilize the computing resources of the electronic device to perform video editing, and improve the utilization rate of computing resources, thereby improving the video processing efficiency.

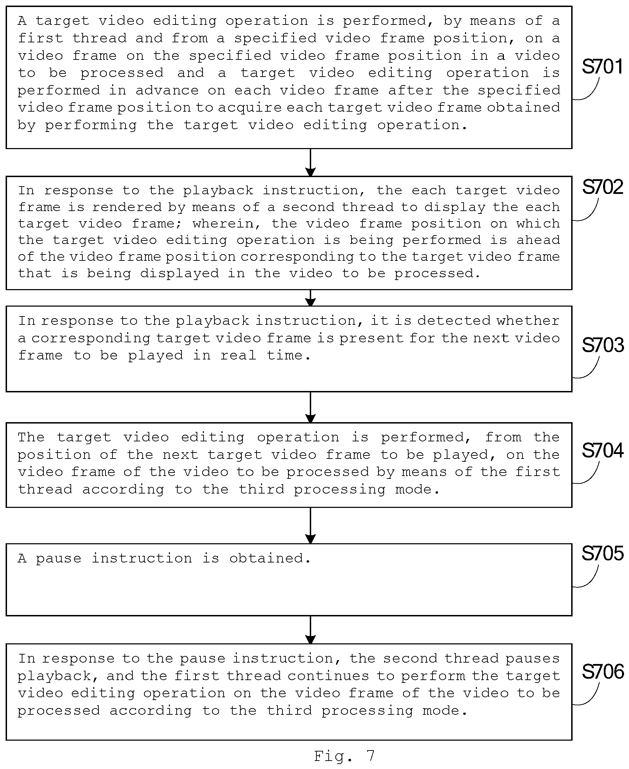

Fig. 7 is a flow chart of a video processing method provided by another embodiment of the present disclosure. Referring to Fig. 7, the method provided by this embodiment comprises:

In S701, a target video editing operation is performed, by means of a first thread and from a specified video frame position, on a video frame on the specified video frame position in a video to be processed and a target video editing operation is performed in advance on each video frame after the specified video frame position to acquire each target video frame obtained by performing the target video editing operation.

In S702, in response to the playback instruction, the each target video frame is rendered by means of a second thread to display the each target video frame; wherein, the video frame position on which the target video editing operation is being performed is ahead of the video frame position corresponding to the target video frame that is being displayed in the video to be processed.

The steps S701 and S702 of this embodiment are similar to S401 and S402 in the embodiment shown in Fig. 4 respectively, so that reference may be made to a detailed description of the embodiment shown in Fig. 4, which will not be described in detail here for the sake of conciseness.

In S703, in response to the playback instruction, it is detected whether a corresponding target video frame is present for the next video frame to be played in real time.

When it is detected that a corresponding target video frame is not present for the next video frame to be played, S704 is performed.

It is to be noted that, a sequence of S702 and S703 is not limited.

In S704, the target video editing operation is performed on the video frame of the video to be processed by means of the first thread according to the third processing mode from the position of the next target video frame to be played.

It is to be noted that, to perform the target video editing operation according to the third processing mode from the position of the next target video frame to be played does not mean that the next video frame on which the target video editing operation is to be performed is the video frame corresponding to the position of the next video frame to be played. For example, the next video frame to be played is the 10th frame of the video frame to be processed, while a corresponding target video frame is not present for the 10th frame; then, starting from the 10th frame, the first thread performs the target video editing operation according to the third processing mode, however, the determined video frame position to perform the target video editing operation may be the 13th frame, 15th frame and the like in the video frame to be processed, thereby ensuring that the video frame position on which the target video editing operation is being performed is ahead of the playback progress.

In this embodiment, during the process of performing the target video editing operation on the video to be processed, a playback instruction is received; in response to the preview instruction, when it is detected that a corresponding target video frame is not present for the next video frame to be played, the video editing processing mode is switched, which may reduce the resource consumption as much as possible due to that it is necessary to frequently switch the video editing processing mode by frequent operations from a user. In addition, by the playback processing mode, it can be ensured that the video frame position on which the target video editing operation is being performed is always ahead of the playback progress during the playback process, so that the problems such as serious user preview stuttering and screen blurring are solved and the video processing efficiency is improved, which is favorable for enhancing the user experience.

Alternatively, on the basis of the embodiment shown in Fig. 7, it further comprises:
In S705, a pause instruction is obtained.

In S706, in response to the pause instruction, the second thread pauses playback, and the first thread continues to perform the target video editing operation on the video frame of the video to be processed according to the third processing mode.

Specifically, when the application receives a pause instruction, the second thread stops rendering the target video frame, that is, pausing the playback of the target video frame.

Since there is a process of performing a target effect for the video to be processed when the pause instruction is received, it is possible not to interrupt this process, that is, the first thread continues to perform a target video editing operation on the video to be processed, i.e., continues to perform a target video editing operation on the video frame of the video to be processed according to the third processing mode. In this way, it is possible to effectively utilize the computing resources of the electronic device to perform video editing, and improve the utilization rate of computing resources, thereby improving the video processing efficiency.

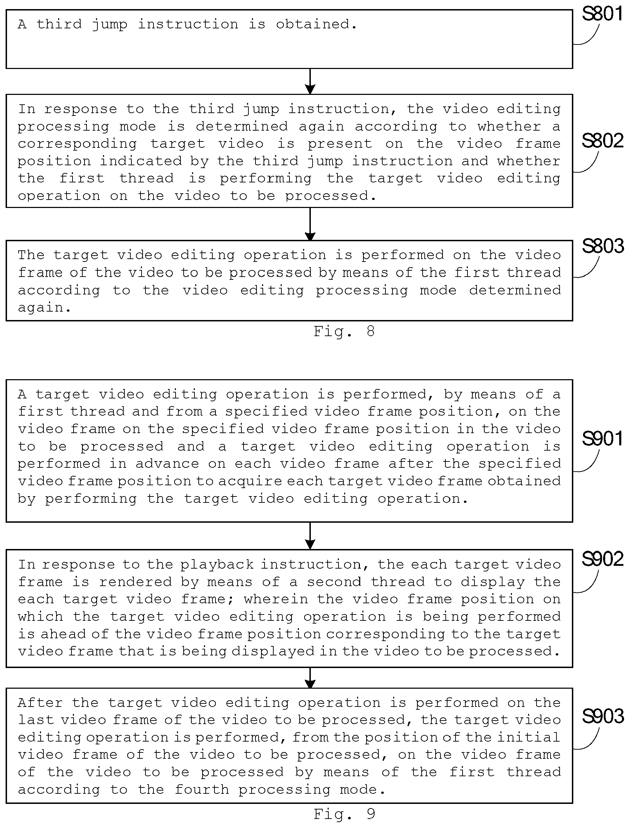

Fig. 8 is a flow chart of a video processing method provided by another embodiment.

Wherein, the application supports jumping to a video frame position, and thus, during the process of playing each target video frame, the application may also obtain a jump instruction, that is, on the basis of any of the above-described embodiments from Figs. 1 to 7, the method of this embodiment may also be performed.

Referring to Fig. 8, the method of this embodiment comprises:
In S801, a third jump instruction is obtained.

In S802, in response to the third jump instruction, the video editing processing mode is determined again according to whether a corresponding target video is present on the video frame position indicated by the third jump instruction and whether the first thread is performing the target video editing operation on the video to be processed.

In S803, the target video editing operation is performed on the video frame of the video to be processed by means of the first thread according to the video editing processing mode determined again.

Moreover, the target video frame corresponding to a video frame position indicated by the jump instruction is rendered by means of the second thread, and the target video frame corresponding to a video frame position indicated by the third jump instruction is displayed.

In some cases, during the playing process, the user inputs the third jump instruction, and the application may switch a playback state to pause; in other cases, during the playing process, the user inputs the third jump instruction, and the application may also play the target video frame from the video frame position indicated by the third jump instruction.

In this embodiment, if the application switches a playback state to a pause state in response to the third jump instruction, the following instances might be present:
In an instance (a), a corresponding target video frame is present on the video frame position indicated by the third jump instruction, and there is currently a process of performing the target video editing operation on the video to be processed, then the current process is not interrupted, and the first thread continues to perform the target video editing operation on the video to be processed according to the previous video editing processing mode.

Since a corresponding target video frame is present on the video frame position indicated by the third jump instruction, the application may display the target video frame corresponding to a video frame position indicated by the third jump instruction, and since the application may be in a preview pause state, a stuttering phenomenon will not occur. On this basis, the application may continue to perform the current ongoing process.

In an instance (b), a corresponding target video frame is present on the video frame position indicated by the third jump instruction, while there is currently not a process of performing a target effect on the video to be processed; therefore, whether a corresponding target video frame is present may be determined frame by frame from the next frame of the video frame position indicated by the third jump instruction until the target video editing operation is performed on the video to be processed according to the second processing mode from the determined first video frame position on which a corresponding target video frame is not present.

In an instance (c), if a corresponding target video frame is not present on the video frame position indicated by the third jump instruction, the target video editing operation is performed on the video frame of the video to be processed from the video frame position indicated by the third jump instruction according to the second processing mode.

If the application starts playing the target video frame from the video frame position indicated by the third jump instruction in response to the third jump instruction, the video editing processing mode may be switched to the third processing mode, so as to ensure that the video frame position on which the target video editing operation is being performed is always ahead of the current playback progress when the target video frame is played from the video frame position indicated by the third jump instruction, thereby realizing that play stuttering does not occur and meeting a preview requirement of a user.

Wherein, an implementation of determining a switching timing of the video editing processing mode may use the mode shown in any of the aforementioned embodiments in Figs. 5 to 7, so that reference may be made to a detailed description of the aforementioned embodiments in Figs. 5 to 7, which will not be described in detail here for the sake of conciseness.

In the method provided in this embodiment, it is determined whether it is necessary to switch the video editing processing mode by analyzing whether a corresponding target video frame is present on the video frame position indicated by the third jump instruction and whether there is currently a process of performing the target video editing operation. In addition, when it is determined whether to switch the video editing processing mode, the playback state is also considered to ensure a real-time display effect.

Fig. 9 is a flow chart of a video processing method provided by another embodiment of the present disclosure. Referring to Fig. 9, the method of this embodiment comprises:
In S901, a target video editing operation is performed, by means of a first thread and from a specified video frame position, on the video frame on the specified video frame position in the video to be processed and a target video editing operation is performed in advance on each video frame after the specified video frame position to acquire each target video frame obtained by performing the target video editing operation.

In S902, in response to the playback instruction, the each target video frame is rendered by means of a second thread to display the each target video frame; wherein the video frame position on which the target video editing operation is being performed is ahead of the video frame position corresponding to the target video frame that is being displayed in the video to be processed.

The steps S901 and S902 of this embodiment are similar to S101 and S102 in the embodiment shown in Fig. 1 respectively, so that reference may be made to a detailed description of the embodiment shown in Fig. 1, which will not be described in detail here for the sake of conciseness.

In S903, after the target video editing operation is performed on the last video frame of the video to be processed, the target video editing operation is performed, from the position of the initial video frame of the video to be processed, on the video frame of the video to be processed by means of the first thread according to the fourth processing mode.

Wherein, the fourth processing mode is a mode of sequentially performing a target video editing operation on the video frames where corresponding target video frames are not present in the video to be processed. The fourth processing mode is a self-adaptive video editing processing mode.

When the application is performed to the last video frame position of the video to be processed according to any one or more video editing processing modes among the first processing mode to the third processing mode, it is possible to switch to the fourth processing mode, and adequately utilize the computing resources to sequentially perform a target video editing operation on the video frames for which corresponding target video frames are not present in the video to be processed.

Next, the two cases in which the video to be processed comprises one video segment and the video to be processed comprises a plurality of video segments will be introduced respectively:
1. The video to be processed comprises one video segment.

Supposing that the video to be processed comprises one video segment, which is marked as a video segment A₁, when it is detected that the target video editing operation is performed on the last video frame of the video segment A₁, the video editing processing mode is switched to the fourth processing mode, and the target video editing operation is performed, from the initial video frame position of the video segment A₁, sequentially on the video frames on which the target video editing operation has not been performed according to a temporal sequence of the video frames in the video segment A₁.

As an example, the frames of the video segment A₁ comprise 100 frames, and suppose that the target video editing operation is performed on the 50th to 100th frames according to the second processing mode; when it is received that the target video editing operation on the 100th frame is accomplished, it is switched to the fourth processing mode, and the target video editing operation is performed, from the 1st frame, on the 1st to 49th frames frame by frame.

For another example, the video segment A₁ comprises 100 frames, and suppose that the target video editing operation is performed on the 1st frame, the 5th frame, the 10th frame, the 15th frame and the 20th frame according to the first processing mode; it is switched to the second processing mode from the 30th frame, and the target video editing operation is performed from the 30th frame to the 100th frame; when it is detected that the target video editing operation has been accomplished for the 100th frame, it is switched to the fourth processing mode, and the target video editing operation is performed, from the 1st frame, sequentially on the 2nd to 4th, 6th to 9th, 11th to 14th, 16th to 19th frames on which the target video editing operation has not been performed.

2. The video to be processed comprises a plurality of video segments.

Suppose that the video to be processed comprises a plurality of video segments, which are respectively marked as video segments B₁ to B_{N}. When it is detected that the target video editing operation is performed on the last video frame of the video segment Bn, the video editing processing mode is switched to the fourth processing mode, and the target video editing operation is performed, from the initial video frame position of the video segment Bn, sequentially on the video frames on which the target video editing operation has not been performed according to a temporal sequence of the video frames in the video segment Bn. Where N is an integer greater than or equal to 2. And n is an integer greater than or equal to 1 and less than or equal to N.

In other words, in the case where the video to be processed comprises a plurality of video segments, after it is detected that the target video editing operation is performed on the last video frame of a certain video segment, an effect processing task of the fourth processing mode may be preferentially performed in the video segment.

In practical application, each video segment corresponds to one decoder, and the target video editing operation task of the fourth processing mode is performed in the video segment, which may reduce the consumption of computing resources due to updating the decoder by video segment switching. Moreover, the target video editing operation task of the fourth processing mode is performed in the video segment, so that it is possible to adequately utilize the computing resources and improve the video processing efficiency.

As an example, suppose that the video to be processed comprises three video segments, which are respectively video segments B₁, B₂ and B₃. The target video editing operation is currently being performed on the video segment B₂ according to the second processing mode; when it is detected that the target video editing operation is performed on the last video frame of the video segment B₂, it is switched to the fourth processing mode, and the target video editing operation is performed, from the initial video frame position of the video segment B₂, sequentially on the video frames for which a corresponding target video frame is not present in the video segment B₂.

When corresponding target video frames are present for all the video frames in the video segment B₂, the video segment B₂ may be marked as "accomplished". If another operation instruction is not received, the target video editing operation may be performed on the video segment B₁ and the video segment B₃.

Here, description will be made with the video segment B₂ that has accomplished the target video editing operation and the video segment B₁ which is the next video segment to be processed as an example.

The target video editing operation might not have been performed on the video segment B₁, so that a corresponding target video frame is not present for any video frame in the video segment B₁. In this case, for the video segment B₁, the target video editing operation may be performed, from the initial video frame position of the video segment B₁, sequentially on each video frame of the video segment B₁, by first using the first processing mode. On this basis, when it is detected that the target video editing operation has been performed on the last video frame of the video segment B₁, it is switched to the fourth processing mode, and the target video editing operation is performed sequentially on the video frames in the video segment B₁ for which a corresponding target video frame is not present.

The target video editing operation might have been performed on the video segment B₁, so that corresponding target video frames are present for some video frames in the video segment B₁. In this case, for the video segment B₁, the target video editing operation is performed, from the initial video frame position of the video segment B₁, sequentially on the video frames in the video segment B₁ for which a corresponding target video frame is not present by using the fourth processing mode.

It is to be noted that, if all the video frames in the video segment B₁ are present with corresponding target video editing operations, the video segment B₁ will be marked as "accomplished", and according to the above-described marking, it may be determined that the target video editing operation is not required to be performed on the video segment B₁.

When the next video segment to be processed is the video segment B₃, its implementation is similar to the implementation wherein the video segment B₁ is the next video segment to be processed, so that reference may be made to a detailed description as mentioned previously, which will not be described in detail here.

In the method provided by this embodiment, during the process of performing the target video editing operation on the video frame of the video to be processed, when it is detected that the target video editing operation is performed on the last video frame of the video to be processed, the video editing processing mode is switched to the fourth processing mode, and the target video editing operation is sequentially performed on the video frames for which corresponding target video frames are not present in the video to be processed.

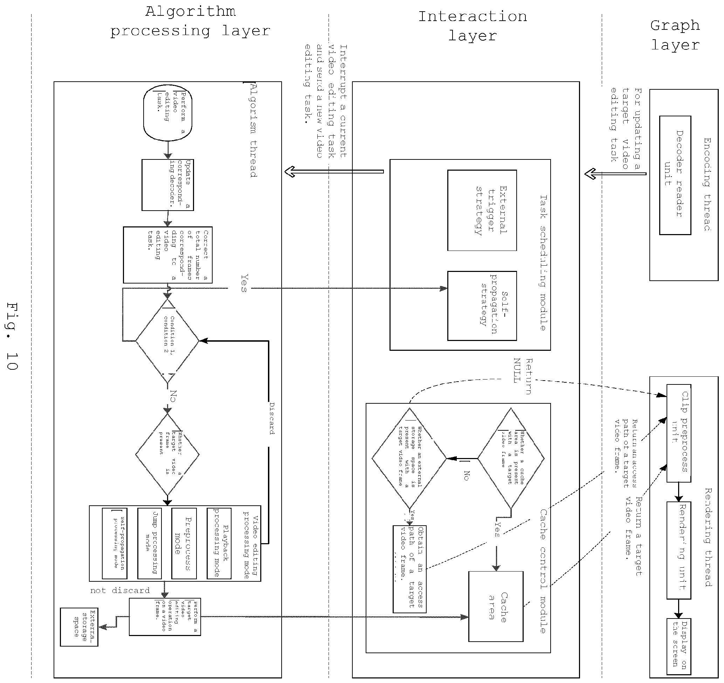

Fig. 10 is a schematic frame diagram of a video processing apparatus provided by one embodiment of the present disclosure. The video processing apparatus shown in Fig. 10 comprises three entity layers, which are respectively: a graph layer, an interaction layer and an algorithm processing layer.

The graph layer comprises a decoding thread and a rendering thread; wherein the decoding thread comprises a decoder reader unit; the rendering thread comprises a clip preprocess unit.

The decoder reader unit is configured to update an algorithm processing task that is being performed in an algorithm processing layer according to an operation instruction input by the user, for example, a jump instruction and a playback instruction; and synchronously update a rendering position.

The clip preprocess unit is configured to judge whether a corresponding target video frame is present on a current video frame position; if YES, the target video frame is read, and the texture is uploaded to perform rendering and displaying on the screen; if NO, according to a previous video frame on which the target video editing operation is performed, the data of its corresponding target video frame is read, and the texture is uploaded to perform rendering and displaying on the screen.

The interaction layer comprises: a task scheduling module and a cache control module.

Wherein, the task scheduling module is configured to generate a video editing task and send a video editing task to the algorithm processing layer.

It is to be noted that, the task scheduling module may generate a video editing task based on the operation instruction input by the user, or may generate a video editing task based on the information returned by the algorithm processing layer indicating to switch the video editing processing mode to a self-propagation processing mode. Therefore, the task scheduling module may be regarded as performing task scheduling by an external trigger strategy and a self-propagation strategy.

In the entire framework of the video processing apparatus, the algorithm task is the smallest processing unit. Each time a video editing operation of a certain editing (clip) is added, an algorithm task, that is, an algorithm task (task Param) object, is created, and a task identifier (task ID) is returned, where one algorithm task object uniquely corresponds to one task identifier.

The algorithm task (task Param) object is a struct, and the algorithm task records all the parameters necessary for algorithm processing on a clip, and holds a task processing example (task Process wrapper) for citation.

The task processing example (task Process wrapper) holds a Lab algorithm model example in one-to-one correspondence therewith, and manages the content corresponding thereto. The task processing example maintains a main file (MANE File) for recording the related information (for example, the time stamp information indicating the position of the video frame, such as PTS information) of all the algorithm results (that is, the target video frames) of this path file, and providing interface query.

In practical application, the Lab algorithm model example has a large amount of data; for example, the Lab algorithm model example in intelligent matting is about 100 megabytes, and in order to reduce the case of out of memory (OOM), the Lab algorithm model is destroyed immediately after use.

The cache control module is configured to return the target video frame to the rendering thread according to the target video frame stored in the cache; when a corresponding target video frame is not present in the cache, the access path of the target video frame in the external storage space is returned to the rendering thread; and if the target video frame is not present in the external storage space, NULL is returned to the rendering thread (return NULL).

The algorithm layer may also be referred to as an algorithm interaction layer, an intermediate layer and the like, and the present disclosure is not limited thereto.

The algorithm processing layer comprises: an algorithm task management module, which provides an external access interface, for example, the algorithm task management module provides an interface for adding, deleting and querying an effect processing task and progress.

The algorithm task management module itself also holds an algorithm task (task Param) object, an algorithm processing example and an algorithm thread.

Wherein, the algorithm thread is essentially a thread object, which is a thread selected from a thread pool and performs an effect processing task in a corresponding message queue.

When the algorithm thread performs the video editing task, it may comprise the following steps:
In Step 1, a corresponding decoder is updated.

In Step 2, a total number of frames corresponding to the video editing task is corrected.

In Step 3, it is judged whether the number of processed frames is equal to the total number of frames, or it is judged whether the initial position of the target video editing operation is the last video frame of the video to be processed.

It is to be noted that, whether the number of processed frames is equal to the total number of frames corresponds to the condition 1 in Fig. 10, and whether the initial position of the target video editing operation is the last video frame of the video to be processed corresponds to the condition 2 in Fig. 10.

In Step 4, when neither of the above-described conditions is satisfied, it is determined whether a corresponding target video frame is already present for the video frame; if YES, skip performing the target video editing operation on the video frame; If NO, proceed to perform step 5.

In Step 5, it is determined whether the video frame is a video frame required to be discarded according to the corresponding video editing processing mode.

Wherein, the video editing processing mode referred to here may be any of a playback processing mode, a jump processing mode, a preprocess mode and a self-propagation processing mode. For the meaning of the video editing processing modes described above, reference may be made to a previous description.

It is to be noted that, if the video editing processing mode is a playback processing mode, it is determined whether the video frame is a video frame required to be discarded according to the playback rate, and if it is a video frame required to be discarded, the target video editing operation is not required; and if it is not a video frame required to be discarded, proceed to perform step 6.

If the video editing processing mode is a jump processing mode, each video frame is a video frame not required to be discarded.

If the video editing processing mode is preprocess mode, the key frame is a video frame not required to be discarded, and proceed to perform step 6; other frames are video frames required to be discarded.

When the video editing processing mode is a self-propagation mode, the video frames not present with corresponding target video frames are all the video frames not required to be discarded; the video frames present with corresponding target video frames are all the video frames required to be discarded.

In Step 6, the target video editing operation is performed on the video frame to obtain a corresponding target video frame.

In Step 7, the target video frame corresponding to the video frame is stored.

Wherein, the target video frame corresponding to the video frame may be stored in the external storage space and the cache at the same time. When rendering is performed by the rendering thread, if a corresponding target video frame is present in the cache, data may be directly read from the cache; and if a corresponding target video frame is not present in the cache, a corresponding target video frame is read from the external storage space. In this way, it is possible to reduce the data input/output times and improve the video processing efficiency.

In addition, when the target video frame corresponding to the video frame is stored, the relevant information of the target video frame may be transferred to a callback service for the callback service to call the service thread to perform related operations. For example, during the process of performing the target video editing, the callback service may provide a feedback of a current progress of performing the target video editing to the service thread.

With the framework shown in Fig. 10 above, the algorithm thread may perform the target video operation on the video to be processed based on a plurality of video editing and processing modes, so as to ensure that the performing process of the algorithm thread is always ahead of the progress of the rendering thread, so that the problem of user preview stuttering is solved. In addition, the algorithm thread may independently perform the task of performing a target video editing operation on the video frame of the video to be processed after receiving the same without affecting the coding thread and the rendering thread in an upper layer, so as to realize parallel processing among the coding thread, the algorithm thread and the rendering thread and solve the problem that the rendering thread is blocked due to time-consuming processing of the algorithm thread, thereby solving the problem of user preview stuttering.

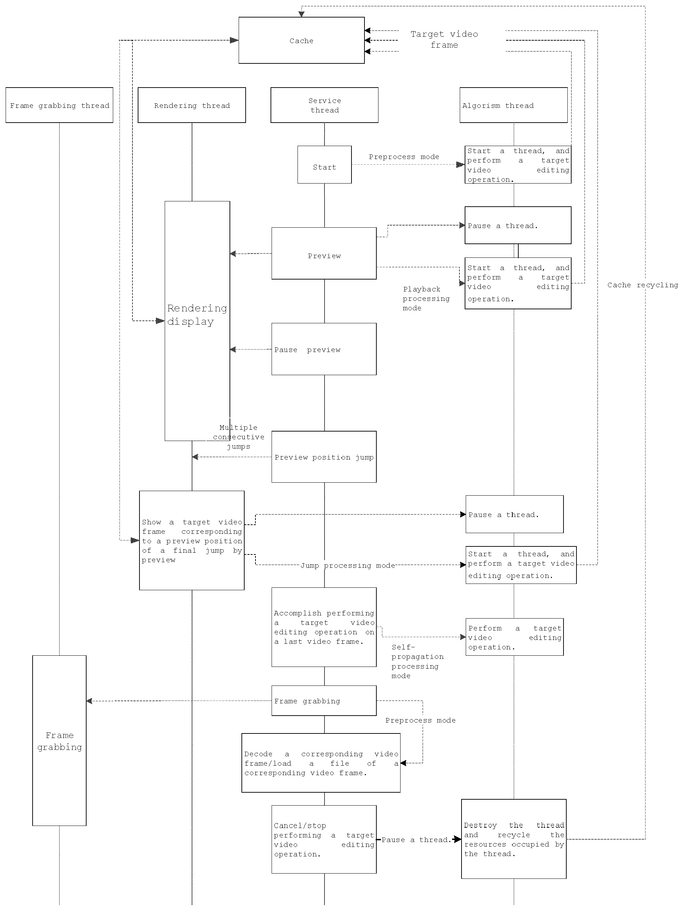

Fig. 11 is a schematic view of a life cycle of each thread in the embodiment shown in Fig. 10 provided by one embodiment of the present disclosure. In conjunction with Fig. 11, it comprises: a frame grabbing thread, a rendering thread, a service thread and an algorithm thread.

Wherein, the frame grabbing thread is configured to perform synchronous frame grabbing; the rendering thread is configured to render the target video frame for play; the service thread is configured to control the algorithm thread to perform the target video editing operation on each video frame of the video to be processed according to the determined video editing processing mode and control the pause and start of play; the algorithm thread is configured to perform the target video editing operation on the corresponding video frame according to an instruction of the service thread.

When a video editing instruction to perform a target video editing operation on each video frame of the video to be processed is received, first of all, the service thread sets a video editing processing mode as a preprocess mode or a jump processing mode, and controls the algorithm thread to start and run an algorithm according to the set video editing processing mode, so as to perform a target video editing operation on the video frame of the video to be processed. Referring to Fig. 11, in this process, the corresponding target video frames are required to be cached sequentially.

When playback is required, the service thread first pauses the algorithm thread and sets the video editing processing mode as the playback processing mode, and controls the algorithm thread to run an algorithm according to the playback processing mode, so as to perform the target video editing operation on the video frame of the video to be processed. Referring to Fig. 11, in this process, it is still necessary to cache the corresponding target video frames sequentially. Synchronously, the service thread controls the rendering thread to read the corresponding target video frame from the cache to perform rendering and displaying for the user to preview.

When the preview is paused, the service thread controls the rendering thread to pause the playback.

When jumping the video frame position, the service thread first pauses the algorithm thread and sets the video editing processing mode as the jumping processing mode, controls the algorithm thread to run an algorithm according to the jumping processing mode, and performs a target video editing operation, from the video frame position of the final jump, on the video frame of the video to be processed. Referring to Fig. 11, in this process, it is still necessary to cache the corresponding target video frame synchronously starting from the video frame position of the final jump. Synchronously, the service thread controls the rendering thread to show the target video frame on the corresponding video frame position.

When the target video editing operation is performed on the last video frame of the video to be processed, the service thread sets the video editing processing mode as the self-propagation processing mode, and controls the algorithm thread to perform, from the first video frame position of the video to be processed, the target video editing operation sequentially on the video frames on which the target video editing operation has not been performed. Referring to Fig. 11, in this process, it is still necessary to cache the corresponding target video frames sequentially.

When the target video editing operation of the video to be processed is cancelled or stopped, the service thread controls the algorithm thread to stop run an algorithm and recycle the resources occupied by the algorithm thread. Afterwards, the rendering thread and the algorithm thread are recycled.

In conjunction with Figs. 10 and 11, by way of the framework shown in Fig. 10 and combined with the interaction between the threads shown in Fig. 11, it is possible to implement performing the target video editing operation on each video frame of the video to be processed, and effectively solve the problem of user preview stuttering.

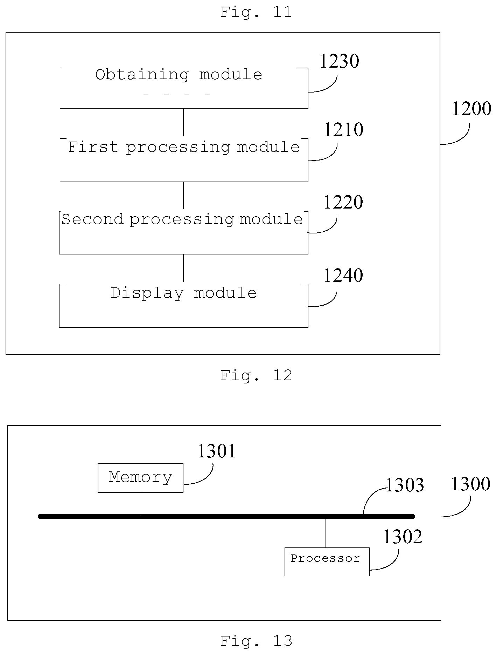

Fig. 12 is a schematic structural view of a video processing apparatus provided by one embodiment of the present disclosure. Referring to Fig. 12, the video processing apparatus 1200 provided by this embodiment comprises:
The first processing module 1210, configured to perform, by means of a first thread and from a specified video frame position, a target video editing operation on the video frame on the specified video frame position in the video to be processed and perform the target video editing operation in advance on each video frame after the specified video frame position to acquire each target video frame obtained by performing the target video editing operation.

The second processing module 1220, configured to render the each target video frame by means of a second thread to show the each target video frame in response to a playback instruction; wherein the video frame position on which the target video editing operation is being performed is ahead of the video frame position corresponding to the target video frame that is being displayed in the video to be processed.

As one possible implementation, the video processing apparatus 1200 may further comprise: a display module 1240. The display module 1240 is configured to display each target video frame.

As one possible implementation, the specified video frame position is determined according to the video frame position positioned when the video editing instruction is obtained; wherein the video editing instruction is used for instructing to perform the target video editing operation on the video to be processed; and the video frame position positioned when the video editing instruction is obtained is a preset video frame position or a video frame position specified by a first jump instruction.

Correspondingly, the video processing apparatus 1200 may further comprise: an obtaining module 1230.

The obtaining module 1230 is configured to obtain a video editing instruction and a first jump instruction.

As one possible implementation, the specified video frame position is determined according to the video frame position specified by a second jump instruction, and the second jump instruction is an instruction after the video editing instruction for performing the target video editing operation on the video to be processed.

Correspondingly, the obtaining module 1230 is further configured to obtain a second jump instruction.

As one possible implementation, if the specified video frame position is determined according to the video frame position positioned when the video editing instruction is obtained, before performing, by means of a first thread and from a specified video frame position, a target video editing operation on the video frame on the specified video frame position in the video to be processed and performing the target video editing operation in advance on each video frame after the specified video frame position to acquire each target video frame obtained by performing the target video editing operation, the first processing module 1210 is further configured to determine a video editing processing mode corresponding to the first thread according to the specified video frame position; wherein the video editing processing mode is a first processing mode or a second processing mode, the first processing mode is a mode of performing the target video editing operation on a key frame, and the second processing mode is a mode of performing the target video editing operation frame by frame.

As one possible implementation, the first processing module 1210 is specifically configured to determine that the video editing processing mode corresponding to the first thread is the first processing mode if the specified video frame position is the preset video frame position; and determine that the video editing processing mode corresponding to the first thread is the first processing mode or the second processing mode if the specified video frame position is the video frame position specified by the first jump instruction.

As one possible implementation, the first processing module 1210 is specifically configured to determine whether a corresponding target video frame is present on the specified video frame position; if a corresponding target video frame is not present on the specified video frame position, a video editing processing mode corresponding to the first thread is determined according to whether the specified video frame position is the preset video frame position or the video frame position specified by the first jump instruction.

As one possible implementation, the first processing module 1210 is specifically configured to determine that the video editing processing mode corresponding to the first thread is the second processing mode if a corresponding target video frame is present on the specified video frame position.

Correspondingly, the second processing module 1220 is specifically configured to determine whether a corresponding target video frame is present frame by frame from the specified video frame position until the first video frame position on which a corresponding target video frame is not present is determined; and perform, from the first video frame position on which a corresponding target video frame is not present, the target video editing operation on the video frame of the video to be processed according to the second processing mode by means of the first thread.

As one possible implementation, if the specified video frame position is determined according to the video frame position specified by the second jump instruction, before performing, by means of a first thread and from a specified video frame position, a target video editing operation on the video frame on the specified video frame position in the video to be processed and performing the target video editing operation in advance on each video frame after the specified video frame position to acquire each target video frame obtained by performing the target video editing operation, the first processing module 1210 is further configured to determine that the video editing processing mode corresponding to the first thread is the second processing mode when it is determined that a corresponding target video frame is not present on the specified video frame position.

As one possible implementation, if a corresponding target video frame is present on the specified video frame position and the first thread is currently performing the target video editing operation on the video to be processed, the first processing module 1210 does not interrupt the first thread, so that the first thread continues to perform the target video editing operation on the video to be processed.

As one possible implementation, the first processing module 1210 is further configured to switch the video editing processing mode to a third processing mode in response to the playback instruction, and perform, by means of the first thread, the target video editing operation on the video frame of the video to be processed according to the third processing mode; wherein the third processing mode is a mode of determining the video frame position for performing the target video editing operation according to the playback rate.

As one possible implementation, the first processing module 1210 is specifically configured to detect whether a next target video frame to be played is present in real time in response to the playback instruction; and perform, from the position of the next target video frame to be played, the target video editing operation on the video frame of the video to be processed by means of the first thread according to the third processing mode when it is detected that a next target video frame to be played is not present.

As one possible implementation, the first processing module 1210 is specifically configured to perform, from the video frame position on which the target video editing operation is being performed when the playback instruction is obtained, the target video editing operation on the video frame of the video to be processed by means of the first thread according to the third processing mode in response to the playback instruction.

As one possible implementation, the first processing module 1210 is specifically configured to determine a switching position corresponding to the third processing mode according to a preset processing duration of performing the target video editing operation for a single video frame, playback rate and the video frame position on which the target video editing operation is currently being performed in response to the playback instruction; and perform, from the switching position, the target video editing operation on the video frame of the video to be processed by means of the first thread according to the third processing mode.

As one possible implementation, the first processing module 1210 is further configured to pause the second thread from rendering the target video frame in response to the pause instruction; and the first thread continues to perform the target video editing operation on the video frame of the video to be processed according to the third processing mode.

Correspondingly, the obtaining module 1230 is further configured to obtain a pause instruction.

As one possible implementation, after performing the target video editing operation on the last video frame of the video to be processed, the first processing module 1210 is further configured to perform, from the position of the initial video frame of the video to be processed, the target video editing operation on the video frame of the video to be processed by means of the first thread according to a fourth processing mode; wherein the fourth processing mode is a mode of sequentially performing the target video editing operation on the video frames for which corresponding target video frames are not present in the video to be processed.

The video processing apparatus provided by this embodiment may be used to perform the technical solution according to any of the method embodiments described previously, with similar implementation principles and technical effects, so that reference may be made to detailed description of the method embodiments described previously, which will not be described in detail here for the sake of conciseness.

Fig. 13 is a schematic structural view of an electronic device provided by one embodiment of the present disclosure. Referring to Fig. 13, the electronic device 1300 provided by this embodiment comprises: a memory 1301 and a processor 1302.

Wherein, the memory 1301 may be an independent physical unit which may be connected with the processor 1302 via a bus 1303. The memory 1301 and the processor 1302 may also be integrated together and implemented by hardware.

The memory 1301 is configured to store program instructions which are called by the processor 1302 to perform the operations according to any of the above method embodiments.

Alternatively, when a part or an entirety of the method in the above-described embodiments is implemented by software, the above-described electronic device 1300 may also only comprise the processor 1302. The memory 1301 for storing programs is located outside the electronic device 1300, and the processor 1302 is connected with the memory through a circuit/wire for reading and executing the programs stored in the memory.

The processor 1302 may be a central processing unit (CPU), a network processor (NP) or a combination of CPU and NP.

The processor 1302 may further comprise a hardware chip. The above-described hardware chip may be an application-specific integrated circuit (ASIC), a programmable logic device (PLD) or a combination thereof. The above-described PLD may be a complex programmable logic device (CPLD), a field-programmable gate array (FPGA), a generic array logic (GAL) or any combination thereof.

The memory 1301 may comprise a volatile memory such as a random-access memory (RAM); the memory may also comprise a non-volatile memory, such as a flash memory, a hard disk drive (HDD) or a solid-state drive (SSD); the memory may also comprise a combination of the above-described kinds of memories.

The present disclosure further provide a readable storage medium comprising computer program instructions that, when executed by at least one processor of the electronic device, implement the video processing method shown in any of the above-described method embodiments.

The present disclosure further provide a computer program product that, when executed by a computer, causes the computer to implement the video processing method shown in any of the above-described method embodiments.

It is to be noted that, the relational terms such as "first" and "second" herein are only used to distinguish one entity or operation from another entity or operation, but do not necessarily require or imply any such actual relationship or sequence presented between these entities or operations. Moreover, the terms "comprising", "including" or any other variation thereof are intended to cover non-exclusive inclusions, so that a process, method, article or device comprising a series of elements comprises not only those elements, but also other elements not explicitly listed or elements inherent to such process, method, article or device. In the case where there are no more restrictions, an element defined by the phrase "comprising one..." does not exclude an additional identical element also presented in the process, method, article or device comprising the element.

The above content only pertains to a detailed description of the present disclosure, so that those skilled in the art may understand or realize the present disclosure. Multiple modifications to these embodiments will be obvious for those skilled in the art, and the general principles defined herein may be realized in other embodiments without departing from the spirit or scope of this disclosure. Therefore, the present disclosure will not be limited to these embodiments described herein, but intended to conform to the broadest scope consistent with the principles and novel features disclosed herein.

## Claims

1. A video processing method, comprising:
performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation;
rendering the each target video frame by means of a second thread to display the each target video frame in response to a playback instruction; wherein the video frame position on which the target video editing operation is being performed is ahead of the video frame position corresponding to the target video frame that is being displayed in the video to be processed.

2. The method according to claim 1, wherein the specified video frame position is determined according to the video frame position positioned when the video editing instruction is obtained; wherein the video editing instruction is used for instructing to perform the target video editing operation on the video to be processed; and the video frame position positioned when the video editing instruction is obtained is a preset video frame position or a video frame position specified by a first jump instruction.

3. The method according to claim 1, wherein the specified video frame position is determined according to the video frame position specified by a second jump instruction, and the second jump instruction is an instruction after the video editing instruction for performing the target video editing operation on the video to be processed.

4. The method according to any of claims 2 to 3, wherein if the specified video frame position is determined according to the video frame position positioned when the video editing instruction is obtained, before the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation, the method further comprises:
determining a video editing processing mode corresponding to the first thread according to the specified video frame position; wherein the video editing processing mode is a first processing mode or a second processing mode, the first processing mode is a mode of performing the target video editing operation on key frames, and the second processing mode is a mode of performing the target video editing operation frame by frame.

5. The method according to claim 4, wherein the determining a video editing processing mode corresponding to the first thread according to the specified video frame position comprises:
determining that the video editing processing mode corresponding to the first thread is the first processing mode if the specified video frame position is the preset video frame position; and
determining that the video editing processing mode corresponding to the first thread is the first processing mode or the second processing mode if the specified video frame position is the video frame position specified by the first jump instruction.

6. The method according to claim 4, wherein the determining a video editing processing mode corresponding to the first thread according to the specified video frame position comprises:
determining whether a corresponding target video frame is present on the specified video frame position; and
determining a video editing processing mode corresponding to the first thread according to whether the specified video frame position is the preset video frame position or the video frame position specified by the first jump instruction if a corresponding target video frame is not present on the specified video frame position.

7. The method according to claim 6, wherein the method further comprises:
determining that the video editing processing mode corresponding to the first thread is the second processing mode if a corresponding target video frame is present on the specified video frame position;
the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation comprises:
determining whether a corresponding target video frame is present frame by frame from the specified video frame position until determining a first video frame position on which a corresponding target video frame is not present; and
performing the target video editing operation on the video frame of the video to be processed from the first video frame position on which a corresponding target video frame is not present by means of the first thread according to the second processing mode.

8. The method according to any of claims 3 to 7, wherein if the specified video frame position is determined according to the video frame position specified by the second jump instruction, before the performing, by means of a first thread and from a specified video frame position, a target video editing operation on a video frame on a specified video frame position in a video to be processed and performing the target video editing operation in advance on each video frame after the specified video frame position to acquire each target video frame obtained by performing the target video editing operation, the method further comprises:
determining that the video editing processing mode corresponding to the first thread is the second processing mode if a corresponding target video frame is not present on the specified video frame position.

9. The method according to claim 8, wherein the method further comprises:
if a corresponding target video frame is present on the specified video frame position, and the first thread is currently performing the target video editing operation on the video to be processed, then not interrupting the first thread, so that the first thread continues to perform the target video editing operation on the video to be processed.

10. The method according to any of claims 1 to 9, wherein the method further comprises:
switching the video editing processing mode to a third processing mode in response to the playback instruction, and performing the target video editing operation by means of the first thread on the video frame of the video to be processed according to the third processing mode; wherein the third processing mode is a mode of determining the video frame position for performing the target video editing operation according to a playback rate.

11. The method according to claim 10, wherein the switching the video editing processing mode to a third processing mode in response to the playback instruction, and performing the target video editing operation by means of the first thread on the video frame of the video to be processed according to the third processing mode comprises:
detecting whether a next target video frame to be played is present in real time in response to the playback instruction; and
performing the target video editing operation by means of the first thread on the video frame of the video to be processed according to the third processing mode from the position of the next target video frame to be played when it is detected that a next target video frame to be played is not present.

12. The method according to any of claims 10 to 11, wherein the switching the video editing processing mode to a third processing mode in response to the playback instruction, and performing the target video editing operation by means of the first thread on the video frame of the video to be processed according to the third processing mode comprises:
performing the target video editing operation on the video frame of the video to be processed from the video frame position on which the target video editing operation is being performed when the playback instruction is obtained by means of the first thread according to the third processing mode in response to the playback instruction.

13. The method according to any of claims 10 to 12, wherein the switching the video editing processing mode to a third processing mode in response to the playback instruction, and performing the target video editing operation by means of the first thread on the video frame of the video to be processed according to the third processing mode comprises:
determining a switching position corresponding to the third processing mode according to a preset processing duration of performing the target video editing operation for a single video frame, playback rate and the video frame position on which the target video editing operation is currently being performed in response to the playback instruction; and
performing the target video editing operation on the video frame of the video to be processed from the switching position by means of the first thread according to the third processing mode.

14. The method according to any of claims 10 to 13, wherein the method further comprises:
obtaining a pause instruction; and
pausing rendering of the target video frame by means of the second thread in response to the pause instruction, while the first thread continues to perform the target video editing operation on the video frame of the video to be processed according to the third processing mode.

15. The method according to any of claims 1 to 14, wherein the method further comprises:
Performing the target video editing operation on the video frame of the video to be processed from the position of an initial video frame of the video to be processed by means of the first thread according to a fourth processing mode after the target video editing operation is performed on a last video frame of the video to be processed;
wherein the fourth processing mode is a mode of sequentially performing the target video editing operation on the video frames for which corresponding target video frames are not present in the video to be processed.

16. A video processing apparatus comprising:
a first processing module configured to perform, by means of a first thread and from a specified video frame position, a target video editing operation on a video frame on a specified video frame position in a video to be processed, and perform the target video editing operation in advance on each video frame after the specified video frame position to acquire each target video frame obtained by performing the target video editing operation; and
a second processing module configured to render the each target video frame by means of a second thread to show the each target video frame in response to a playback instruction; wherein the video frame position on which the target video editing operation is being performed is ahead of the video frame position corresponding to the target video frame that is being displayed in the video to be processed.

17. An electronic device comprising: a memory and a processor;
the memory is configured to store computer program instructions; and
the processor is configured to execute the computer program instructions, so that the electronic device implements the video processing method according to any of claims 1 to 15.

18. A readable storage medium comprising: computer program instructions;
the computer program instructions, when executed by at least one processor of an electronic device, cause the electronic device to implement the video processing method according to any of claims 1 to 15.

19. A computer program product that, when executed by a computer, causes the computer to implement the video processing method according to any of claims 1 to 15.
